# EUROPEAN PATENT SPECIFICATION

(11) **EP 0 581 468 B1**
(45) Date of publication and mention of the grant of the patent: **10.01.1996**
(21) Application number: 93305399.3
(22) Date of filing: 09.07.1993
(51) Int. Cl.: C11B 3/00

(54) **Preparation of edible neem oil**
Herstellung eines essbaren Neemöls
Préparation d'une huile de margousier comestible

(30) Priority: 27.07.1992 US 923868
(43) Date of publication of application: 02.02.1994
(73) Proprietor: ROHM AND HAAS COMPANY, Philadelphia Pennsylvania 19105 (US)
(72) Inventor: Lidert, Zev, Doylestown, Pennsylvania 18901 (US)
(74) Representative: Smith, Julian Philip Howard

(56) References cited:
- EP-A- 0 028 488
- DE-A- 3 809 427
- FR-A- 557 953
- FR-A- 1 056 139
- N.V. BRINGI 'Non-traditional oilseeds and oils of India' 1987 , OXFORD & IBH PUBLISHING CO. PVT. LTD. , NEW DELHI, INDIA
- FOOD CHEMISTRY vol. 26, no. 2 , 1987 pages 119 - 124 C. RUKMINI 'Chemical and nutritional evaluation of neem oil'
- N.V. BRINGI 'Non-traditional oilseeds and oils of India' 1987 , OXFORD & IBH PUBLISHING CO. PVT. LTD. , NEW DELHI, INDIA; 5. NEEM (AZADIRACHTA INDICA JUSS) SEED OIL by N.V. BRINGI and M.S. THAKUR, pp. 118-142

## Description

This invention relates to a new process for refining and deodorizing the oil from the seeds of the neem tree *(Azadirachta indica* Juss.) to provide edible neem oil.

The neem (or nim) tree is a subtropical tree which is native to the arid regions of India, Pakistan, Sri Lanka and parts of Southeast Asia and Western Africa. Once or twice a year, it bears a yellow, bitter fruit. The fruit contains a seed composed of a kernel and a husk. The kernel contains about 40 to 60% by weight neem oil. This oil can be isolated by standard procedures used in vegetable oil industry that involve expelling the oil in a cooker-prepress followed by extraction of the residual oil with hexane in a solvent extractor.

Neem oil has all the typical features of an edible, vegetable oil. It is composed of edible triglycerides and non-edible or undesirable impurities such as phospholipids (gums), fatty acids, soaps, colored impurities, for example carotenoids and chlorophyll, and a host of other molecules. Such impurities are routinely removed in a typical refining process comprising the steps:
1. Degumming with water or an acid such as citric or phosphoric acid to remove phospholipids.
2. Caustic refining with sodium hydroxide to remove fatty acids and soaps.
3. Absorption on bleaching earth to remove colored materials.
4. Steam distillation to remove low molecular weight materials.

The first two steps of the refining process are most commonly carried out on raw oils stripped of hexane. However, for some oils, such as cotton oil, it is preferable to refine hexane solutions of the oil, for example 65% oil in hexane. As part of the refining process, the oils are commonly hydrogenated in order to improve their thermal and storage stability.

In order to be considered an edible product, the oil has to pass certain criteria. Some of these are chemical tests while others such as taste and smell are more arbitrary and are dependent on local cultures and conditions. The chemical tests include analysis of the fatty acid content of triglycerides. Erucic acid (C₂₀) and saturated acids such as palmitic (C₁₆) and stearic (C₁₈) are undesirable. Trace metals, chlorophyll, free fatty acids and phosphorous are also undesirable. Peroxide value, indicating stability towards oxidants, should be close to zero. Oils should be pale and their colour is expressed by a standardized colour index. In addition to these analyses, rape, mustard and canola oils are routinely assayed for sulfur which indicates the presence of glucosinolates. These compounds, occurring only in wild varieties, are catalyst poisons and therefore undesirable from the viewpoint of the refiners. More importantly, however, they lend the oil a specific odour and taste which is not popular with many consumers.

Analysis of crude neem oil suggests that it has the characteristics of a standard edible oil with regard to its fatty acid composition. Most of its impurities are of the standard, expected type except for sulfur, a very important exception. Two methods are in use for sulfur analysis: the Inductively Coupled Plasma Atomic Emission Spectroscopy (ICP) analytical procedure and the Raney Nickel Reduction (Ra(Ni)) method. The ICP method is very rapid and convenient, but the industry standard in North America, <1 part per million (ppm) for canola, is based on the older and rather cumbersome Ra(Ni) method which routinely gives values ten times lower than those obtained using the ICP method. The ICP and Ra(Ni) analytical procedures are described in "Sulfur Levels in Canola Oils from Canadian Crushing Plants: Analysis by Raney Nickel Reduction and Inductively Coupled Plasma Atomic Emission Spectroscopy," *Proceedings of the GCIRC Eighth* *International Rapeseed Congress, July 9, 1991, Saskatoon, Sask., Canada,* Vol. 5, page 1396, D. I. McGregor, ed., published by the Organizing Committee of the Eighth International Rapeseed Congress under the Auspices of the Groupe Consultatif International de Recherche sur le Colza (GCIRC) and the Canola Council of Canada. The sulfur content in neem oil is very high, 2200 ppm, using the ICP analytical procedure, and consequently imparts a very disagreeable odour and taste to the neem oil.

All sulfur values reported in this specification were obtained using the ICP method for sulfur analysis unless otherwise indicated.

Standard vegetable oil refining steps do not reduce the sulfur content down to an acceptable level in neem oil, although the other typical impurities are removed. Hydrogenation, to improve oil stability, is not possible due to the poisoning of the hydrogenation catalyst by the sulfur. This failure of the standard refining methodology may account for the lack of interest by food producers in neem oil.

C. Rukmini, *Food Chemistry* **26**, 119-124 (1987) discloses a debitterized neem oil. However, the details for obtaining such debitterized neem oil are not revealed.

Thus there is a need for a process for preparing a grade of neem oil that is substantially odour-free and which possesses a sulfur content sufficiently low for the oil to be regarded as edible. Such a sulfur content is below about 1550ppm. Such a process also needs to be easily employable in existing standard refining procedures used by the producers of vegetable oils.

Accordingly the present invention provides in one aspect a process for the preparation of neem oil containing less than 1550 ppm of sulfur which comprises:
a) dissolving crude neem oil in an alkane, preferably hexane,
b) treating the alkane solution with an alkaline solution of hydrogen peroxide,
c) isolating the alkane solution,
d) removing the alkane to obtain crude neem oil,
e) purifying the crude neem oil, and optionally including the further step(s) of
f) hydrogenating, bleaching and/or further purification.

Although this process is suitable for preparing neem oils having a sulfur content below about 1550ppm, it will be appreciated that it can be used to reduce the sulfur content to any desired level higher than that if required. A further aspect of the invention comprises the use of the above process to reduce the sulfur content of neem oil.

The Table below summarises the standard procedure for refining oils in hexane, and compares it with a preferred embodiment of the present invention.

### TABLE 1: COMPARISON OF REFINING SEQUENCES

### Standard Sequence for Refining Oils in Hexane

1. Caustic refining to remove free fatty acids.
2. Water wash to remove soaps and gums.
3. Hexane strip.
4. Hydrogenation for oil stabilization.
5. Bleaching to remove coloured materials using bleaching earth with activated carbon.
6. Deodorization to remove lower molecular weight materials by steam distillation.

### Invention

1. Dissolve crude neem oil in an alkane.
2. Treat the alkane/neem oil solution with hydrogen peroxide/caustic/alcohol refining to remove free fatty acids and most sulfurous materials.
3. Water wash or filtration through silica of the alkane solution to remove soaps and gums.
4. Alkane strip.
5. Bleaching to remove colored materials using bleaching earth with activated carbon.
6. Purifying by distillation or chromatography to remove lower molecular weight impurities including sulfurous materials, preferably by steam distillation.
7. Hydrogenation for oil stabilization.
8. Deodorization to remove lower molecular weight materials by steam distillation.

Although the steps following the hydrogen peroxide/caustic/ alcohol refining step of the present invention process are listed in the particular order as shown in Table 1, other sequences of steps would also yield edible neem oil. For example, the water wash or filtration through silica of step 3 may be performed after the alkane strip of step 4. In another example, the bleaching process of step 5 may be performed after the hydrogenation of step 7: or the purification of step 6 may be performed prior to the bleaching process of step 5.

The choice of an alkaline solution of hydrogen peroxide for the removal of sulfur containing compounds from neem oil is based on the theory that the majority of such compounds would have a disulfide linkage and therefore could be oxidized to water soluble sulfates. The presence of an alcohol allows the sulfur containing compounds to be solubilized in the aqueous phase. This can be shown, using sodium hydroxide as the base, as follows: 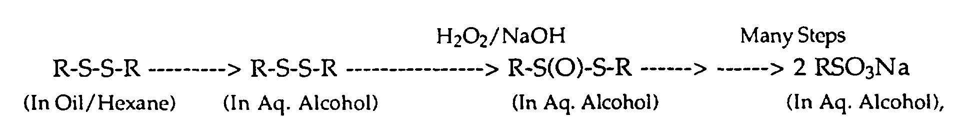 wherein R represents an organic moiety.

The neem oil may be derived from either unrefined neem oil or neem oil which has been previously caustic refined. The solution of hydrogen peroxide generally comprises hydrogen peroxide, a base, for example sodium hydroxide, potassium hydroxide or a mixture thereof, and, optionally, an alcohol, for example methanol or, more preferably, ethanol. The hydrogen peroxide solution may be made up from about one part of aqueous 35% hydrogen peroxide solution and about ten parts of an alcoholic solution of an alkaline material on a volume/volume (v/v) basis. Such an alkaline material may comprise about 1% on a w/w basis of the alcoholic solution of the alkaline material.

Various proportions of neem oil and alkane may be employed. A preferred amount of neem oil in the alkane solution is from about 50% to about 80%, more preferably about 65%, neem oil on a w/w basis.

In a preferred embodiment of this invention, 65 parts of unrefined or previously caustic refined neem oil in 35 parts of hexane on a w/w basis is treated with a solution comprising hydrogen peroxide, sodium hydroxide and ethanol. The concentration of hydrogen peroxide in the solution is from about 0.1% to about 15% on a w/w basis; the concentration of sodium hydroxide in the solution is from about 0.05% to about 5%, more preferably from about 0.5% to about 3%, and even more preferably from about 1.0% to about 3.0% on a w/w basis; and the concentration of ethanol is from 0% to about 75%, more preferably from about 25% to about 70%, and even more preferably from about 50% to about 70% on a w/w basis. The neem oil which resulted from this treatment, after a water wash to remove soaps and gums followed by a hexane strip, possessed not more than 1550 ppm of sulfur, more preferably not more than 800 ppm of sulfur, and even more preferably not more than 500 ppm of sulfur.

The neem oil which results from the hydrogen peroxide treatment may be further processed by subjecting it to a steam distillation to remove lower molecular weight materials, including sulfur containing materials, to provide a neem oil containing less than 200 ppm of sulfur. This deodorized neem oil may be partially hydrogenated in order to enhance its stability and to provide a neem oil containing less than 100 ppm of sulfur. If desired, this partially hydrogenated oil may be subjected to a bleaching step, using bleaching earth with activated carbon in order to remove coloured impurities, and a deodorization step to remove residual lower molecular weight materials in order to provide a neem oil containing not more than 50 ppm of sulfur.

Preferably, the process of the invention comprises the following:
1. dissolving crude neem oil in an alkane such as heptane, hexane and the like;
2. treating the alkane solution with from about 10 milliliters (mL) to about 100 mL, preferably from about 40 mL to about 90 mL, of an alkaline solution of hydrogen peroxide optionally in the presence of an alcohol, such as a sodium hydroxide solution of hydrogen peroxide in ethanol, per 100 grams (g) of the alkane solution at a temperature range of from about 30° C to about 70° C, preferably in the range of from about 45° C to about 60° C;
3. isolating the alkane solution and washing or filtering or both if desired;
4. removing the alkane to obtain low sulfur containing crude neem oil;
5. purifying the crude neem oil by distillation, preferably steam distillation, or by chromatographic methods; followed by, if desired,
6. hydrogenating, bleaching and further purification.

### Experimental Examples 1 - 14: Treatment of Unrefined or Refined Neem Oil in Hexane with Alkaline Hydrogen Peroxide Solutions

Examples 1-12 were experiments run on 100 g of a caustic refined, 65% by weight solution of neem oil, containing 1650 ppm of sulfur, in hexane. Examples 13 and 14 were experiments run on 100 g of an unrefined, 65% by weight solution of neem oil, containing 2200 ppm of sulfur, in hexane. The alkaline solutions of hydrogen peroxide were prepared from aqueous 35% hydrogen peroxide, aqueous 95% ethanol (C₂H₅OH) and aqueous 2%, 4%, 8% or 16% sodium hydroxide (NaOH) solutions in the proportions listed in Table 2. The hexane solution of neem oil and the alkaline solution of hydrogen peroxide (H₂O₂) were stirred together for 30 minutes at 50-55°C, the phases separated by centrifugation, and the hexane solution of neem oil phase stripped of hexane and analyzed for sulfur.

**TABLE 2**

| H₂O₂ REAGENT CONCENTRATIONS AND RESULTING SULFUR LEVEL FOR EXAMPLES 1-14 | | | | | | |
|---|---|---|---|---|---|---|
| Ex. No. | Components of alkaline H₂O₂ reagent | | | | Total mL | ppm of Sulfur |
| | NaOH | | % C₂H₅OH | % H₂O₂ | | |
| | % | g | | | | |
| 1 | 0.5 | 0.1 | 50 | 8.75 | 20 | 1260 |
| 2 | 0.25 | 0.05 | 50 | 8.75 | 20 | 1425 |
| 3 | 0.05 | 0.01 | 50 | 8.75 | 20 | 1504 |
| 4 | 0.25 | 0.05 | 25 | 8.75 | 20 | 1488 |
| 5 | 0.25 | 0.05 | 62.5 | 8.75 | 20 | 1408 |
| 6 | 0.25 | 0.03 | 0 | 8.75 | 20 | 1500 |
| 7 | 0.5 | 0.2 | 62.5 | 8.75 | 40 | 1030 |
| 8 | 1.0 | 0.4 | 62.5 | 8.75 | 40 | 684 |
| 9 | 2.0 | 0.8 | 62.5 | 8.75 | 40 | 445 |
| 10 | 1.0 | 0.8 | 62.5 | 8.75 | 80 | 590 |
| 11 | 2.0 | 1.6 | 62.5 | 8.75 | 80 | 375 |
| 12 | 1.0 | 0.4 | 68.75 | 8.75 | 40 | 606 |
| 13 | 1.9 | 1.6 | 60 | 10.3 | 85 | 265 |
| 14 | 2.7 | 1.6 | 42 | 14.6 | 60 | 469 |

### Example 15: Large Scale Experiment Using the Parameters of Example 11

A solution made up of 65% by weight of caustic refined neem oil in hexane, 2000 g total, was treated with 1600 ml of alkaline hydrogen peroxide solution according to the conditions of Example 11. The total weight of sodium hydroxide present in the alkaline hydrogen peroxide solution was 32 g. The weight concentrations of the NaOH, C₂H₅OH and H₂O₂ components of the alkaline hydrogen peroxide reagent were 2.0%, 62.5% and 8.75%, respectively, as in Example 11. After work up according to the procedure of Example 11, the neem oil was analyzed for sulfur and found to contain 268 ppm of sulfur.

### Example 16: Deodorization, Hydrogenation and Bleaching of the Neem Oil from Example 15

The neem oil resulting from the alkaline hydrogen peroxide treatment of Example 15 was filtered through silica to remove soaps. This was followed by bleaching on bleaching earth mixed with activated carbon at 110°C and reduced pressure (28 inches of Hg). The bleached and filtered neem oil was analyzed and found to contain 174 ppm of sulfur.

The bleached and filtered oil was next subjected to a two hour deodorization step with 3% by weight of steam per hour at 255° C and 4 mm of Hg pressure. The once deodorized neem oil was analyzed and found to contain 77 ppm of sulfur.

The once deodorized neem oil was hydrogenated for 30 minutes using a 2% by weight standard nickel on kiselghur catalyst. The resulting partially hydrogenated neem oil had a melting point of 43° C and a sulfur content of 45 ppm.

The partially hydrogenated neem oil was subjected to a second deodorization step using the conditions noted above for the first deodorization step. The resulting completely treated neem oil was analyzed for sulfur and found to contain 44 ppm using the ICP analytical method and 4 ppm using the Ra(Ni) analytical method and was colourless and odourless.

### Example 17: Use of Methanol in the Alkaline Solution of Hydrogen Peroxide

One part, by weight, of an unrefined 65% (w/w) neem oil in hexane solution was treated with one part of an alkaline solution of H₂O₂ prepared from 1 part of aqueous 35% H₂O₂ and 10 parts of methanolic 1% NaOH (v/v) for 30 minutes at 45-55° C. Analysis for sulfur indicated that the sulfur content of the neem oil was reduced from an initial value of 2200 ppm of sulfur to 95 ppm of sulfur.

## Claims

1. A process for the preparation of neem oil containing less than 1550 ppm of sulfur which comprises:
a) dissolving crude neem oil in an alkane, preferably hexane,
b) treating the alkane solution with an alkaline solution of hydrogen peroxide,
c) isolating the alkane solution,
d) removing the alkane to obtain crude neem oil, and
e) purifying the crude neem oil,
and optionally including the further step(s) of
f) hydrogenating, bleaching and/or further purification.

2. Process according to claim 1 wherein the alkaline solution of hydrogen peroxide comprises hydrogen peroxide; an alkaline material, preferably sodium hydroxide, potassium hydroxide or a mixture of sodium and potassium hydroxide; and optionally an alcohol, preferably ethanol or methanol.

3. Process according to claim 2 wherein the hydrogen peroxide solution comprises 0.1-15% by weight of hydrogen peroxide; 0.05-5%, preferably 0.5-3% and more preferably 1-3% by weight of sodium hydroxide; and 0-75%, preferably 25-70% and more preferably 50-70% by weight of ethanol.

4. Process according to claim 3 wherein the alkaline solution of hydrogen peroxide comprises one part by volume of aqueous 35% hydrogen peroxide solution and ten parts by volume of a solution of a 1% solution of sodium hydroxide in ethanol.

5. Process according to any preceding claim wherein the neem oil in the alkane solution of neem oil is derived from unrefined neem oil or from caustic refined neem oil.

6. Process according to any preceding claim wherein from 10 to 100 mL, preferably from 40 to 90 mL of hydrogen peroxide solution is utilized per 100 g of alkane solution of neem oil.

7. Process according to any preceding claim, wherein the resultant neem oil has a sulfur content of no more than 800 ppm, preferably no more than 500 ppm.

8. Process according to any preceding claim wherein the solution of neem oil comprises 50-80%, preferably 65% by weight of neem oil in hexane.

9. Process according to any preceding claim further comprising the step of purifying the resultant neem oil by Steam distillation to provide a purified neem oil containing not more than 200 ppm of sulfur, and optionally also including hydrogenation and bleaching steps to provide a neem oil containing not more than 50 ppm of sulfur.

10. Use of a process as defined in any preceding claim to reduce the sulfur content of neem oil.

## Patentansprüche

1. Verfahren zur Herstellung von Margosaöl bzw. Nimöl, das weniger als 1550 ppm Schwefel enthält, wobei das Verfahren umfaßt:
a) Auflösen von rohem Nimöl in einem Alkan, vorzugsweise Hexan,
b) Behandeln der Alkanlösung mit einer all<alischen Wasserstoffperoxidlösung,
c) Isolieren der Alkanlösung,
d) Entfernen des Alkans, um eine rohe Nimöllösung zu erhalten, und
e) Reinigen des rohen Nimöls,
und wobei das Verfahren wahlweise den bzw. die weiteren Schritte enthält
f) Hydrieren bzw. Härten, Bleichen und/oder weitere Reinigung.

2. Verfahren nach Anspruch 1, wobei die alkalische Wasserstoffperoxidlösung Wasserstoffperoxid; ein alkalisches Material, vorzugsweise Natriumhydroxid, Kaliumhydroxid oder ein Gemisch von Natrium- und Kaliumhydroxid; und gegebenenfalls einen Alkohol, vorzugsweise Ethanol oder Methanol, umfaßt.

3. Verfahren nach Anspruch 2, wobei die Wasserstoffperoxidlösung 0,1-15 Gew,-% Wasserstoffperoxid; 0,05-5 Gew.-%, vorzugsweise 0,5-3 Gew,% und ganz bevorzugt 1-3 Gew.-% Natriumhydroxid; und 0-75 Gew.-%, vorzugsweise 25-70 Gew.-% und ganz bevorzugt 50-70 Gew.-% Ethanol umfaßt.

4. Verfahren nach Anspruch 3, wobei die all<alische Wasserstoffperoxidlösung einen Volumenteil wäßrige 35%ige Wasserstoffperoxidlösung und 10 Volumenteile einer Lösung einer 1%igen Lösung von Natriumhydroxid in Ethanol umfaßt.

5. Verfahren nach einem der vorhergehenden Ansprüche, wobei das Nimöl in der Alkanlösung von Nimöl aus unraffiniertem Nimöl oder aus kaustisch raffiniertem Nimöl stammt.

6. Verfahren nach einem der vorhergehenden Ansprüche, wobei 10-100 ml, vorzugsweise 40-90 ml Wasserstoffperoxidlösung pro 100 g Alkanlösung von Nimöl verwendet werden.

7. Verfahren nach einem der vorhergehenden Ansprüche, wobei das sich ergebende Nimöl einen Schwefelgehalt von nicht mehr als 800 ppm, vorzugsweise nicht mehr als 500 ppm, aufweist.

8. Verfahren nach einem der vorhergehenden Ansprüche, wobei die Nimöllösung 50-80 Gew.-%, vorzugsweise 65 Gew.-%, Nimöl in Hexan umfaßt.

9. Verfahren nach einem der vorhergehenden Ansprüche, welches weiter den Schritt der Reinigung des sich ergebenden Nimöls durch Wasserdampfdestillation umfaßt, um ein gereinigtes Nimöl mit nicht mehr als 200 ppm Schwefel bereitzustellen, und wobei das Verfahren gegebenenfalls auch Hydrier- bzw. Härt- und Bleichschritte beinhaltet, um ein Nimöl mit nicht mehr als 50 ppm Schwefel bereitzustellen.

10. Verwendung eines Verfahrens nach einem der vorhergehenden Ansprüche, um den Schwefelgehalt von Nimöl zu reduzieren.

## Revendications

1. Procédé pour la préparation d'une huile de margousier contenant moins de 1550 ppm de soufre qui comprend :
a) la dissolution de l'huile de margousier brute dans un alcane, de préférence l'hexane,
b) le traitement de la solution d'alcane avec une solution alcaline de peroxyde d'hydrogène,
c) l'isolement de la solution d'alcane,
d) l'elimination de l'alcane pour obtenir de l'huile de margousier brute, et
e) la purification de l'huile de margousier brute, avec éventuellement la ou les étapes supplémentaires consistant à
f) l'hydrogénation, le blanchiment et/ou une autre purification.

2. Procédé selon la revendication 1, caractérisé en ce que la solution alcaline de peroxyde d'hydrogène contient du peroxyde d'hydrogène ; une matière alcaline, de préférence de l'hydroxyde de sodium, de l'hydroxyde de potassium ou un mélange d'hydroxyde de sodium et d'hydroxyde de potassium ; et éventuellement un alcool, de préférence de l'éthanol ou du méthanol.

3. Procédé selon la revendication 2, caractérisé en ce que la solution de peroxyde d'hydrogène comprend 0,1 à 15% en poids de peroxyde d'hydrogène ; 0,05 a 5%, de préférence 0,5 à 3% et mieux encore 1 à 3% en poids d'hydroxyde de sodium ; et 0 à 75%, de préférence 25 à 70% et mieux encore 50 à 70% en poids d'éthanol.

4. Procédé selon la revendication 3, caractérisé en ce que la solution alcaline de peroxyde d'hydrogène comprend une partie en volume de solution aqueuse de peroxyde d'hydrogène à 35% et 10 parties en volume de solution d'une solution à 1% d'hydroxyde de sodium dans l'éthanol.

5. Procédé selon l'une quelconque des revendications précédentes, caractérisé en ce que l'huile de margousier dans la solution d'alcane d'huile de margousier dérivée de l'huile de margousier non raffinée ou de l'huile de margousier raffinée par lavage alcalin.

6. Procédé selon l'une quelconque des revendications précédentes, caractérisé en ce que de 10 à 100 ml, de préférence de 40 à 90 ml de solution de peroxyde d'hydrogène sont utilisés pour 100 g de solution d'alcane d'huile de margousier.

7. Procédé selon l'une quelconque des revendications précédentes, caractérisé en ce que l'huile de margousier qui en résulte a une teneur en soufre ne dépassant pas 800 ppm, de préférence ne dépassant pas 500 ppm.

8. Procédé selon l'une quelconque des revendications précédentes, caractérisé en ce que la solution d'huile de margousier comprend 50 à 80%, de préférence 65% en poids d'huile de margousier dans l'hexane.

9. Procédé selon l'une quelconque des revendications précédentes comprenant de plus l'étape de purification de l'huile de margousier qui en résulte par distillation à la vapeur pour obtenir une huile de margousier purifiée ne contenant pas plus de 200 ppm de soufré, et éventuellement comprenant aussi les étapes d'hydrogénation et de blanchiment pour obtenir une huile de margousier ne contenant pas plus de 50 ppm de soufre.

10. Utilisation d'un procédé tel qu'il est défini dans l'une quelconque des revendications précédentes pour réduire la teneur en soufre de l'huile de margousier.
